(19) Europäisches Patentamt

European Patent Office

Office européen des brevets

(11) Veröffentlichungsnummer: **0 098 886**
**B1**

(12) # EUROPÄISCHE PATENTSCHRIFT

(45) Veröffentlichungstag der Patentschrift:
11.06.86

(51) Int. Cl.⁴: **E 01 B 1/00, E 01 B 19/00**

(21) Anmeldenummer: 82103603.5

(22) Anmeldetag: 28.04.82

(54) **Matte aus elastischem Werkstoff.**

(30) Priorität: 03.06.81 DE 3121946

(43) Veröffentlichungstag der Anmeldung:
25.01.84 Patentblatt 84/4

(45) Bekanntmachung des Hinweises auf die Patenterteilung:
11.06.86 Patentblatt 86/24

(84) Benannte Vertragsstaaten:
**BE DE FR NL SE**

(56) Entgegenhaltungen:
**DE - A - 1 658 308**
**DE - A - 2 701 597**
**DE - A - 2 911 319**
**DE - U - 7 703 357**
**DE - U - 7 823 955**
**DE - U - 7 930 088**
**DE - U - 8 013 779**
**FR - A - 2 125 747**
**US - A - 4 235 371**

(73) Patentinhaber: Clouth Gummiwerke AG, Niehler
Strasse 92 - 116, D-5000 Köln 60 (DE)

(72) Erfinder: Braitsch, Hans, Dipl.-Ing., Kippekausen 105,
D-5060 Bergisch-Gladbach 3 (DE)
Erfinder: Ortwein, Hermann, Eichhornstrasse 15,
D-5000 Köln 60 (DE)
Erfinder: Vorwald, Josef, Parsivalstrasse 1 a,
D-5000 Köln 30 (DE)

(74) Vertreter: Happe, Otto, Dipl.-Ing., Isselburger Strasse 12,
D-5000 Köln 60 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft eine unter einer Schotterbettung angeordnete Matte aus elastischem Werkstoff, deren Oberseite eine Schutzschicht aufweist. Derartige Matten dienen dazu, die Schotterbettung und die darauf verlegten Geleise gegen den Untergrund und gegen Tunnel- oder Trogwände elastisch zu lagern, um eine Dämmung des Körperschalls zu bewirken, wobei die Schutzschicht Beschädigungen der Matte durch den aufliegenden Schotter verhindern soll.

Die -Z.B. ans US-A-4 235 371 und DE-A1-2701 597-bekannten Matten der vorgenannten Art bestehen aus geschäumten Werkstoffen oder aus mit einer Vollgummibahn ummanteltes untereinander verklebtes Altgummigranulat. Es sind auch bereits Matten bekannt, die aus mehreren Vollgummilagen bestehen, wobei die Vollgummibahnen Hohlräume aufweisen und weitere Hohlräume durch entsprechende Profilierung der aneinander angrenzenden Flächen der Vollgummibahnen gebildet sind.

Der wesentliche Nachteil der bekannten Matten besteht darin, daß der scharfkantige Schotter trotz der vorhandenen Schutzschicht in kurzer Zeit in die Matte eindringt, wodurch die Matte derart zerstört wird, daß sie schließlich nur noch in granulierter Form vorhanden ist. Eine granulierte Matte vermag aber keinen Körperschall mehr zu dämmen. Ein weiterer Nachteil der bekannten Matten besteht darin, daß sie sich bei Auftreten horizontaler Kräfte in Richtung dieser Kräfte verschieben, so daß an der der jeweiligen Kraft abgewandten Seite schließlich die Schotterbettung unmittelbar auf dem Untergrund aufliegt und daher an diesen Stellen keine Dämmung des Körperschalls mehr möglich ist. Körperschallbrücken können sich bei den bekannten Matten auch dadurch bilden, daß sich beim Stopfen des Schotters über einzelne Schottersteine eine mit ihrer Spitze nach unten weisende Druckpyramide aufbaut, durch die die betreffenden Schottersteine schließlich durch die Matte hindurch bis auf den Untergrund gedrückt werden.

Der Erfindung liegt die Aufgabe zugrunde, die vorgenannten Nachteile zu vermeiden und sicherzustellen, daß die mit einer derartigen Matte zu erzielende Körperschalldämmung über einen langen Zeitraum erhalten bleibt.

Die Lösung der gestellten Aufgabe besteht darin, daß die Schutzschicht durch ein Blech gebildet ist, dessen Härte und Elastizität so bemessen sind, daß der Schotter nicht in die Matte eindringen kann, oder durch eine Platte entsprechender Härte und Elastizität. Das Blech verhindert das Eindringen des Schotters in die Matte und gewährleistet darüber hinaus eine Verteilung der Last auf eine große Fläche, wodurch eine besonders hohe Körperschalldämmung und eine Verlängerung der Lebensdauer der Matte erzielt werden. Das Blech verhindert ferner jegliches Verschieben der Matte, ohne daß ein Verkleben der Matte mit dem Untergrund erforderlich ist.

In Weiterbildung der Erfindung ist das Blech so profiliert, daß sich horizontal verlaufende Bereiche mit schräg verlaufenden Bereichen abwechseln. Durch diese Ausbildung des Bleches wird einerseits ein Verschieben des Schotters auf der Matte verhindert, während andererseits durch den Druck des Schotters auf die schräg verlaufenden Bereiche des Bleches eine auf die Matte einwirkende Druck-Schub-Komponente entsteht, die sich hinsichtlich der Körperschalldämmung vorteilhaft auswirkt. Ein Verschieben des Schotters auf der Matte kann nach einem anderen Merkmal der Erfinddung dadurch verhindert werden, daß das Blech auf seiner freien Oberfläche mit einer Schicht eines Werkstoffs mit hohen Reibungskoeffizienten versehen ist. Diese Schicht kann beispielsweise aus Gummi bestehen.

Bei einer besonders vorteilhaften Ausführungsform der Erfindung besteht die Matte aus mindestens zwei übereinanderliegenden Platten aus elastischem Werkstoff, wobei durch entsprechende Profilierung der sich gegenüberliegenden Flächen der Platten in an sich bekannter Weise im Inneren der Matte Hohlräume gebildet sind, wobei die Profilierung so gewählt ist, daß die Matte im wesentlichen einer Druck-Schub-Beanspruchung ausgesetzt ist, und zwar im Hinblick auf die sich dadurch ergebende Erhöhung der Körperschalldämmung. Durch die Profilierung der sich gegenüberliegenden Flächen der Platten ist ferner die Einfederung der Matte weitgehend vorherbestimmbar. Darüber hinaus ist es wegen der infolge der profilierung der genannten Flächen im Inneren der Matte gebildeten Hohlräume nicht erforderlich, die Matte aus geschäumtem Werkstoff herzustellen oder die einzelnen Platten mit Hohlräumen zu versehen.

Die Herstellung und die Lagerhaltung der die Matte bildenden Platten wird dadurch erheblich vereinfacht, daß die beiden Platten symmetrisch zueinander ausgebildet sind.

Zweckmäßigerweise Weist auch die Unterseite der Matte ein Blech auf, das dem auf der Oberseite der Matte vorgesehenen Blech hinsichtlich Härte und Elastizität entspricht.

Nach einen weiteren Merkmal der Erfindung sind an der Unterseite der Matte an sich bekannte Noppen, Vorsprünge o. dgl. vorgesehen. Auch eine so ausgebildete Matte braucht nicht aus einem geschäumten Werkstoff hergestellt werden oder mit Hohlräumen versehen sein, da die Noppen, Vorsprünge o. dgl. eine ausreichende Einfederung der Matte zulassen.

In der Zeichnung sind mehrere Ausführungsbeispiele der erfindungsgemäßen Matte jeweils in Querschitt dargestellt.

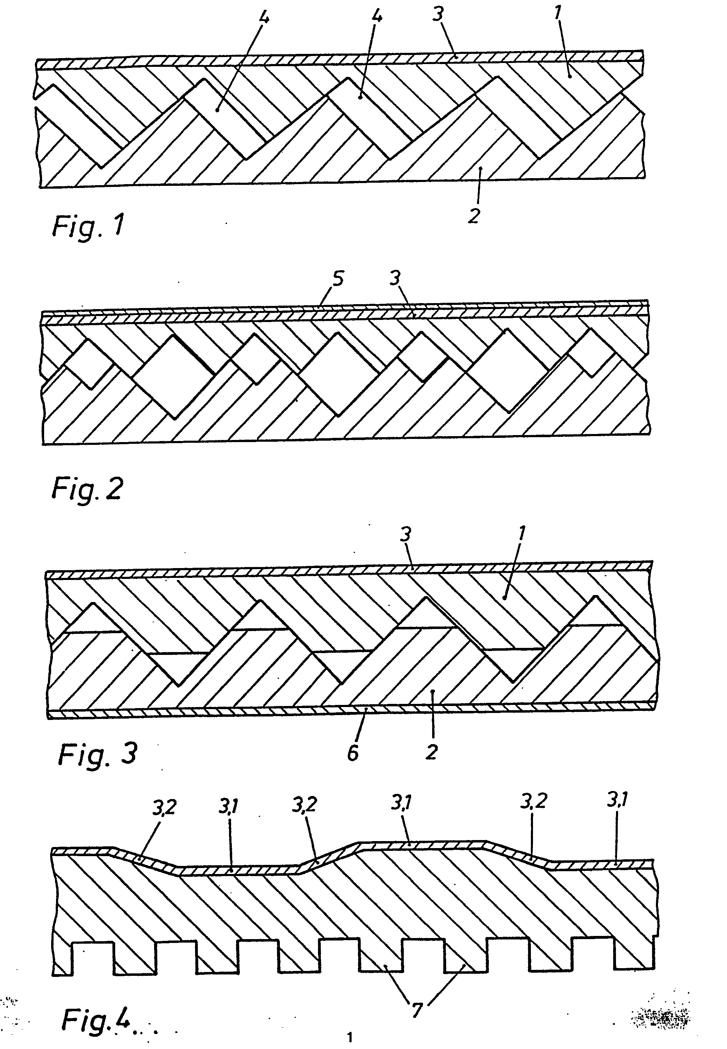

Fig. 1 zeigt eine Matte, die aus einer oberen Platte 1 und einer unteren Platte 2 besteht, wobei die Oberseite der oberen Platte 1 ein Blech 3 aufweist. Zwischen den Platten 1 und 2 sind durch entsprechende Profilierung der sich gegenüberliegenden Flächen Hohlräume 4 gebildet.

Bei der in Fig. 2 dargestellten Matte ist das Blech 3 auf seiner Oberfläche mit einer Schicht 5 eines Werkstoffes mit hohem Reibungskoeffizienten versehen. Die beiden Platten 1 und 2 der in Fig. 3 dargestellten Matte sind symmetrisch zueinander ausgebildet. Ferner ist sowohl die Oberseite der oberen Platte 1 als auch die Unterseite der unteren Platte 2 mit einem Blech 3 bzw. 6 versehen. Bei dieser Matte können ferner sowohl die Oberseite des oberen Bleches 3 als auch die Unterseite des unteren Bleches 6 mit je einer Schicht 5 eines Werkstoffes mit hohem Reibungskoeffizienten versehen sein.

Die in Fig. 4 dargestellte Matte ist an ihrer Oberseite mit einem Blech 3 versehen, das so profiliert ist, daß sich horizontal verlaufende Bereiche 3. 1 mit schräg verlaufenden Bereiche 3.2 abwechseln. Diese Matte ist an ihrer Unterseite mit Noppen 7 versehen.

## Patentansprüche

1. Unter einer Schotterbettung angeordnete Matte aus elastischen Werkstoff deren Oberseite eine Schutzschicht aufweist, dadurch gekennzeichnet, daß die Schutzschicht durch ein Blech (3) gebildet ist, dessen Härte und Elastizität so bemessen sind, daß der Schotter nicht in die Matte eindringen kann, oder durch eine Platte entsprechender Härte und Elastizität.

2. Matte nach Anspruch 1, dadurch gekennzeichnet, daß das Blech (3) so profiliert ist, daß sich horizontal verlaufende Bereiche (3. 1) mit schräg verlaufenden Bereichen (3. 2) abwechseln.

3. Matte nach Anspruch 1 oder 2, dadurch gekennzeichnet, daß das Blech (3) auf seiner freien Oberfläche mit einer Schicht (5) eines Werkstoffes mit hohem Reibungskoeffizienten versehen ist.

4. Matte nach Anspruch 1, 2 oder 3, dadurch gekennzeichnet, daß die Matte aus mindestens zwei übereinanderliegenden Platten (1 und 2) aus elastischem Werkstoff besteht, wobei durch entsprechende Profilierung der sich gegenüberliegenden Flächen der Platten (1 und 2) in an sich bekannter Weise in Inneren der Matte Hohlräume (4) gebildet sind, wobei die Profilierung so gewählt ist, daß die Matte im wesentlichen einer Druck-Schub-Beanspruchung ausgesetztist.

5. Matte nach Anspruch 4, dadurch gekennzeichet, daß die Platten (1 und 2) symmetrisch zueinander ausgebildet sind.

6. Matte nach einem der vorhergehenden Ansprüche, dadurch gekennzeichnet, daß die Unterseite der Matte ein Blech (6) aufweist, das dem auf der Oberseite der Matte vorgesehenen Blech (3) hinsichtlich Härte und Elastizität entspricht.

7. Matte nach einem der Ansprüche 1 bis 3, dadurch gekennzeichnet, daß an der Unterseite der Matte an sich bekannte Noppen (7), Vorsprünge o. dgl. vorgesehen sind.

## Claims

1. Mat of resilient material to be arranged under a bed of broken stones of which the top side is a protection layer, characterized in that this protection layer consists of a metal sheet (3) the hardness and resilience of which are designed in such a way that the broken stones cannot penetrate into the mat, or a plate of respective hardness and resilience.

2. Mat according to claim 1, characterized in that the metal sheet (3) is profiled in such a way that the horizontally arranged surfaces (3.1) alternate with diagonally arranged surfaces (3.2).

3. Mat according to claim 1 or 2, characterized in that the metal sheet (3) on its free surface is provided with a layer (5) of material with a high coefficient of friction.

4. Mat according to claim 1, 2 or 3, characterized in that the mat consists of at least two superimposed plates (1 and 2) of resilient material forming hollow spaces (4) within the mat, which are known as such, by a respective setting up of profiles of the opposing plate surfaces (1 and 2), whereby the setting up of profiles is arranged in such a way that the mat is mainly exposed to a compression and shearing stress.

5. Mat according to claim 4, characterized in that the plates (1 and 2) are arranged in a symmetric fashion to each other.

6. Mat according to one of the above mentioned claims, characterized in that the bottom side of the mat is provided with a metal sheet (6) equivalent to the metal plate (3) on the top side of the mat in respect of hardness and resilience.

7. Mat according to one of the claims 1 to 3, characterized in that the bottom side of the mat is provided with prominent or projecting parts (7) and the like which are known as such.

## Revendications

1. Mat constitué d'une matière élastique et disposé en dessous d'un lit de pierraille, dont la face supérieure présente une couche de protection, caractérisé en ce que la couche de protection est constituée d'une tôle (3) dont la dureté et l'élasticité sont calculées de telle sorte que la pierraille ne puisse pénétrer dans le mat, ou d'une plaque de dureté et d'élasticité équivalentes.

2. Mat suivant la revendication 1, caractérisé en ce que la tôle (3) est profilée de telle sorte que des zones s'étendant horizontalement (3.1) alternent avec des zones (3.2) s'étendant en oblique.

3. Mat suivant la revendication 1 ou 2, caractérisé en ce que, sur sa surface libre, la tôle (3) comporte une couche (5) d'une matière ayant un haut coefficient de friction.

4. Mat suivant la revendication 1, 2 ou 3, caractérisé en ce qu'il est constitué d'au moins deux plaques superposées (1 et 2) en une matière élastique et, moyennant un profilage correspondant des surfaces des plaques (1 et 2) qui se font mutuellement face, des espaces creux (4) sont formés de façon connue en soi à l'intérieur du mat, le profilage étant choisi de telle sorte que le mat soit essentiellement exposé à une sollicitation de pression/cisaillement.

5. Mat suivant la revendication 4, caractérisé en ce que les plaques (1 et 2) sont réalisées symétriquement l'une par rapport à l'autre.

6. Mat suivant l'une des revendications précédentes, caractérisé en ce que la face inférieure de ce mat comporte une tôle (6) qui correspond à la tôle (3) prévue sur la face supérieure du mat en ce qui concerne la dureté et l'élasticité.

7. Mat suivant l'une des revendications 1 à 3, caractérisé en ce que des boutons (7), des saillies ou éléments analogues connus en soi sont prévus sur la face inférieure du mat.

Fig. 1

Fig. 2

Fig. 3

Fig.4...